# EUROPEAN PATENT APPLICATION

(11) **EP 4 819 680 A1**
(43) Date of publication of application: **07.10.2026**
(21) Application number: 25168338.9
(22) Date of filing: 03.04.2025
(51) Int. Cl.: H04W 24/10, G06N 3/00, G06N 20/00, H04L 41/16, H04W 24/02

(54) **DATA COLLECTION CONFIGURATIONS**

(71) Applicant: Nokia Technologies Oy, 02610 Espoo (FI)
(72) Inventor: GHAROUNI, Afsaneh, 80686 Munich (DE); HASSAN, Sakira, 02780 Espoo (FI)
(74) Representative: Bryers Intellectual Property Ltd

(57) **Abstract**

In some examples, an apparatus for user equipment comprises at least one processor, and at least one memory comprising instructions configured for influencing data collection configurations in a wireless communication network which, when executed by the at least one processor, cause the apparatus at least to establish a connection towards a network node of a radio access network, receive, from the network node, information related to data collection configuration parameters supported by the network node, and transmit, to a server for collecting training data, at least part of the received information to enable the server to request at least one data collection configuration for the UE and adapted to the network node configuration capabilities.

## Description

### Technical Field

The present disclosure relates, in general, to scalable and efficient data collection configurations in wireless communication networks.

### Background

In current wireless communication systems, user equipment, UEs, receive configurations for data collection from a network, such as a gNB (base station), without any ability to influence or customize these configurations. This lack of control results in inefficiencies, including biased datasets or redundant data collection, which can negatively impact a training and inference processes of UE-side Artificial Intelligence/Machine Learning (AI/ML) models.

Moreover, the network does not have full knowledge of the data already collected by UEs or their corresponding Over-the-Top (OTT) servers. This limitation makes it computationally complex or infeasible for the network to evaluate dataset quality and optimize configurations. For example, while the network may configure reference signals over multiple frequency bands, the OTT server may require more measurements from specific bands to balance the dataset for model training. Existing solutions lack mechanisms for UEs or OTT servers to communicate such preferences effectively.

Additionally, scalability is a significant challenge. Allowing multiple UEs to transmit configuration requests simultaneously increases uplink traffic and processing complexity at the gNB. Consequently, networks often ignore such requests due to real-time constraints, leaving no viable solution for scalable UE impact on configuration settings.

### Summary

An objective of the present disclosure is to provide a scalable solution that enables UEs or their corresponding OTT servers to suggest preferred data collection configurations to influence network configurations for training, inference, and performance monitoring.

The foregoing and other objectives are achieved by the features of the independent claims.

Further implementation forms are apparent from the dependent claims, the description and the Figures.

A first aspect of the present disclosure provides an apparatus for user equipment, UE, comprising at least one processor, and at least one memory comprising instructions configured for influencing data collection configurations in a wireless communication network which, when executed by the at least one processor, cause the apparatus at least to establish a connection towards a network node of a radio access network, receive, from the network node, information related to data collection configuration parameters supported by the network node, and transmit, to a server for collecting training data, information based at least in part on the received information to enable the server to request at least one data collection configuration for the UE and adapted to the network node configuration capabilities.

In an implementation of the first aspect the apparatus can transmit, to the network, a request for information indicating supported data collection configurations. The apparatus can include at least one associated ID with the request, wherein the at least one associated ID comprises a mapping of consistency between training and inference assumptions based on selected physical or logical network conditions. The apparatus can receive, from the server, a configuration identifier, ID, and include the configuration ID in the request. The apparatus can receive, from the server, an indication to request information indicating supported data collection configurations. The apparatus can transmit, to the server, information relating to a location of the apparatus with the information indicating supported data collection configurations. The apparatus can transmit collected measurement data directly to the server via user plane communication or via a network node. The apparatus can receive, from the server, an indication of a single request for information indicating supported data collection configurations, wherein the indication of the single request comprises an aggregation of multiple requests from user equipment served by the same network node as the apparatus. The apparatus can receive, from the network node, information related to data collection configuration parameters supported by the network node, wherein the parameters comprise at least one of logical parameters and physical parameters, and wherein the information comprises at least one of at least one feasible configuration, a pre-defined set of parameters defining a value or a range of values for one or more parameters to be configured by the network node, an indication to perform CSI reference signal (CSI-RS) measurements for a selected frequency range, a number of CSI-RS and their associated beam width, an upper bound on the number of configurations or parameters that can be requested at a time, an applicability period. The apparatus can transmit, to the server, location-related information. The apparatus can transmit, to the network node, a data collection configuration request, wherein the data collection configuration request includes parameter configurations adapted to the network node configuration capabilities. The apparatus can transmit, in addition to the data collection configuration request, a configuration ID received from the server. The apparatus can transmit, in addition to the data collection configuration request, information received from the server and related to a type and/or a number of user equipment and/or measurements needed. The apparatus can to receive, from the server, and forward to the network node, a specific data collection configuration request, wherein the request includes parameter configurations adapted to the network node configuration capabilities. The apparatus can receive, in response to the data collection configuration request, a data collection configuration, perform data collection according to the received data collection configuration, and transmit a report related to the collected data to the server.

A second aspect of the present disclosure provides a method, comprising establishing, at apparatus for user equipment, UE, a connection towards a network node of a radio access network, receiving, at the apparatus, from the network node, information related to data collection configuration parameters supported by the network node, and transmitting, from the apparatus, to a server for collecting training data, information based at least in part on the received information to enable the server to request at least one data collection configuration for the UE and adapted to the network node configuration capabilities.

A third aspect of the present disclosure provides a non-transitory computer-readable medium storing instructions that, when executed by a processor, perform the method of the second aspect.

These and other aspects of the invention will be apparent from the embodiment(s) described below.

### Brief Description of the Drawings

In order that the present disclosure may be more readily understood, embodiments will now be described, by way of example, with reference to the accompanying drawings, in which:
Figure 1 is a signaling chart relating to NW sharing of applicable (or supported or feasible) configuration information with a UE/its corresponding OTT server via UE, according to an example;
Figure 2 is a signaling chart relating to (NW allowed) collection of historical configuration information by a UE, according to an example;
Figure 3 is a signaling chart relating to a procedure in which an OTT is responsible for scalable UE configuration requests while UE configuration requests are indicated to the NW via UE(s), according to an example;
Figure 4 is a signaling chart relating to a procedure in which UE/OTT request parameter configurations from a gNB via the CN, according to an example;
Figure 5 is a signaling chart relating to a procedure in which UE/OTT requests parameter configurations from a gNB via an OAM function, according to an example;
Figure 6 is a schematic representation of a machine, according to an example; and
Figure 7 is a flowchart of a method, according to an example.

### Detailed Description

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof. The term "and/or" is only an association relationship for describing associated objects and represents that three relationships may exist such that A and/or B may indicate that A exists alone, A and B exist at the same time, or B exists alone. The character "/" generally represents that the associated objects are in an "or" relationship.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

The following contains specific information related to implementations of the present disclosure. The drawings and their accompanying detailed disclosure are merely directed to implementations. However, the present disclosure is not limited to these implementations. Other variations and implementations of the present disclosure will be obvious to those skilled in the art.

The phrases "in one implementation," or "in some implementations," may each refer to one or more of the same or different implementations. The term "coupled" is defined as connected whether directly or indirectly through intervening components and is not necessarily limited to physical connections. The expression "at least one of A, B and C" or "at least one of the following: A, B and C" means "only A, or only B, or only C, or any combination of A, B and C."

The terms "system" and "network" may be used interchangeably.

For the purposes of explanation and non-limitation, specific details such as functional entities, techniques, protocols, and standards are set forth for providing an understanding of the present disclosure. In other examples, detailed disclosure of well-known methods, technologies, systems, and architectures are omitted so as not to obscure the present disclosure with unnecessary details.

Persons skilled in the art will immediately recognize that any network function(s) or algorithm(s) disclosed may be implemented by hardware, software or a combination of software and hardware. Disclosed functions may correspond to modules which may be software, hardware, firmware, or any combination thereof.

A software implementation may include machine- and/or computer- readable and/or executable instructions stored on a machine- and/or computer-readable medium such as memory or other types of storage devices. One or more microprocessors or general-purpose computers with communication processing capability may be programmed with corresponding executable instructions and perform the disclosed network function(s) or algorithm(s).

The microprocessors or general-purpose computers may include Applications Specific Integrated Circuitry (ASIC), programmable logic arrays, and/or using one or more Digital Signal Processor (DSPs). Although some of the disclosed implementations are oriented to software installed and executing on computer hardware, alternative implementations implemented as firmware or as hardware or as a combination of hardware and software are well within the scope of the present disclosure. The computer readable medium includes but is not limited to Random Access Memory (RAM), Read Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

Examples described may be implemented in a communication network, such as any of the following radio access technologies (RATs): Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), or any future RAT such as 6G.

As used herein, the term "network device" or "network node" refers to a node in a communication network via which user equipment may access the network and/or which is capable of controlling radio communication and managing radio resources within a cell. The network node or network device may be referred to as a base station (BS), an access point (AP) or an access node. The network device may be, depending on the applied technology, for example, a node B (NodeB or NB), an evolved NodeB (eNodeB or eNB), an NR NB (also referred to as a gNB), a Remote Radio Unit (RRU), a radio head (RH), a remote radio head (RRH), a relay, an Integrated Access and Backhaul (IAB) node, a low power node, a non-terrestrial network (NTN) or non-ground network device such as a satellite network device, a low earth orbit (LEO) satellite and a geosynchronous earth orbit (GEO) satellite, or an aircraft network device.

Moreover, in connection of split radio access network (RAN), the network device may refer to a centralised unit (CU) of a base station and/or a distributed unit (DU) of a base station. An interface between CU and DU may be referred to as an F1 interface in NR. In the split RAN architecture, node operations may be carried out, at least partly, in the central/centralized unit, CU, (e.g. server, host or node) operationally coupled to the DU, (e.g. a radio head/node). One CU may control one or more DUs, acting at least as transmit/receive (Tx/Rx) nodes. In some embodiments, the DUs may comprise e.g. a radio link control (RLC), medium access control (MAC) layer and a physical (PHY) layer, whereas the CU may comprise the layers above RLC layer, such as a packet data convergence protocol (PDCP) layer, a radio resource control (RRC) and an internet protocol (IP) layers. Other functional splits are possible too. In practice, any processing task may be performed in either the CU or the DU and the boundary where the responsibility is shifted between the CU and the DU may depend on the applied implementation.

The term "terminal device" refers to any end device that may be capable of wireless communication. By way of example, a terminal device may be referred to as a communication device, user equipment (UE), a Subscriber Station (SS), or a Mobile Station (MS). The terminal device may include a mobile phone, a cellular phone, a smart phone, voice over IP (VoIP) phones, wireless local loop phones a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, USB dongles, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

A term "resource", as used herein, may refer to radio resources in time domain, in frequency domain, in space domain, and/or in code domain. Some examples of resources include e.g. a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources.

3GPP RAN2 is one of the working groups under the 3rd Generation Partnership Project (3GPP) Technical Specification Group for Radio Access Networks (TSG RAN). It is responsible for defining and developing specifications related to Radio Layer 2 and Radio Layer 3 protocols, which are critical for the operation of cellular networks, including LTE, 5G NR (New Radio), and beyond.

To enable offline training data collection, different aspects and features that should be supported by any selected option are being discussed in RAN2. One aspect is about the UE request on starting and stopping data collection. Another aspect that extends this start/stop influence is to allow/enable UE influence on a configuration received from a gNB. Such influence would enable collection of high-quality data for training UE-side models. In this context, high-quality may refer to different aspects such as having an unbiased dataset. Since only the UE and/or its corresponding OTT server have full knowledge about the UE hardware characteristics and data collected from different cells in the mobile network, the OTT server and/or the UE can detect what other measurements (and with what characteristics) remain to be collected in order to achieve a sufficiently unbiased dataset.

In another example, during training, it might be concluded that having more measurements or samples with specific characteristics, e.g., belonging to a specific cell and/or frequency range would be useful for training. In such cases, the UE/the corresponding OTT server may need to communicate that specific desire to the NW as well.

In the example of data collection configuration for UE-side model training, an option being discussed in RAN2 is for a UE to send a request for data collection (e.g., start/stop). An aspect under investigation, but which has not yet been finalized or agreed upon, is whether a suggested data collection configuration/associated IDs (if specified)/parameters can be provided to the network.

The exact definition and properties of an associated ID are not yet agreed in RAN1. However, in general, associated ID can comprise at least one example of assistance information that can be communicated from the NW to the UE to enable consistency between training and inference.

For example, during data collection, the NW may configure a UE with configurations X and Y, corresponding to associated ID #1 and ID #2. These IDs and configurations may refer to specific physical or logical conditions in the NW. Hence, the UE can train a model for such physical conditions/associated IDs. Subsequently, during inference, if the NW indicates applicability of associated ID #1, the UE can interpret which model should be used at its side. However, if the NW indicates applicability of associated ID #3, the UE may conclude that none of its available models will work well for this environment and hence, decide to use legacy methods and even optionally, it may request to start data collection for that given associated ID (#3).

Based on the current procedures between a UE and gNB, the UE receives the configuration for data collection from the gNB without having any influence or control about the details of that configuration. However, since the NW (e.g., gNB) does not have full knowledge about the data already collected/being collected at the OTT server of, e.g., a chip or UE vendor, it is either infeasible or computationally complex for the NW to evaluate the quality of the collected dataset. For example, in an ongoing data collection, the NW may try to configure the UE such that a reference signal is transmitted over various resource elements including resource elements with frequency bands from FR1 and FR2. However, it might be the case that the OTT server already has multiple measurements related to FR1 and requires more measurements related to FR2 in order to obtain a balanced data set for model training. According to an example, the UE and/or the OTT server should be allowed to indicate their preference regarding data collection configurations to the NW. However, it is not scalable for multiple UEs to transmit their different suggested configurations to the NW as this would not only increase uplink, UL, traffic but also increases gNB complexity since the NW must process all these requests in as close to a real-time manner as possible (as a UE may stay in a given cell only for a few seconds). As a result, the NW may have to ignore any received suggested configurations.

According to an example, a NW, e.g., gNB/core network (CN) may provide some information about parameters that can be supported by the NW (in general or in a specific period) for the purposes of data collection. In an example, some analysis can be performed by network in advance to determine the parameters. For example, to extract parameters to be provided for the purposes of data collection, the NW may use historical information from UEs, e.g., based on their previous requests, or based on their indication of applicability of certain associated IDs. Such information can be provided by the CN or an operations, administration, and maintenance (OAM) function of the network. Such information can also be transmitted to a UE upon request or can be broadcast. In another example, a UE/CN/OAM may request such information from the gNB, or the CN/OAM can subscribe to get updates relating to parameters.

In an example, instead of sharing such information, the NW may allow the UE to collect historical configurations and area-related information which can be used to determine which configuration requests have a high chance of being accepted by the NW. gNB can indicate that this data is permitted for collection. Area-related information can relate to an area in which the UE is being served and may comprise different accuracies (e.g., within 10m, 1km and so on). Other examples for area-related information can comprise the identifiers of the serving cell, gNB, tracking area, etc.

Similarly to NW supported configuration parameters, the following provides a set of examples for the content of a UE request (implying the UE preferences regarding the configuration it receives from the NW) according to an example. The pre-defined set of parameters can be directly in the form of feasible configurations, e.g., CSI measurement configuration and RRC Reconfiguration. In another example, the pre-defined set of parameters may define an exact value or range for one or more parameters that can be configured by the gNB. For instance, a configuration request may indicate a request to perform CSI reference signal (CSI-RS) measurements for frequency ranges X and Y. In another example, the request may indicate a specific periodicity regarding the RS transmission, such as every T ms for example. Another example can relate to the number of CSI-RS and their beam width (e.g., a UE may request to receive CSI-RS when the beam width used by the gNB is narrower than a given predetermined threshold). In this context, the parameters may refer to both logical and physical parameters. In other examples, some IDs with specific mappings to specific characteristics can be communicated to the UE. One example of such an ID is an associated ID, as described above.

According to an example, an indication of one (or a limited) set of parameter(s)/configuration(s), instead of multiple ones from independent UEs can be provided. In an example, an OTT server, CN or OAM can be responsible for this scalability aspect. That is, instead of multiple UEs providing a set of parameters to the gNB, one or more (e.g., a limited number of) parameter(s)/configuration(s) can be selected to be configured by a gNB. Depending on the location, where scalability measures are enforced, the path of the UE request to the gNB differs. For example, OTT servers can collect location-related information from UEs, including information about their current serving gNB. This allows the OTT server to communicate a request about configurations for data collection to the appropriate UE(s). In an example, the OTT server can indicate to multiple UEs served by the same gNB to request only one configuration, e.g., one set of configuration parameters at a time. In case the OTT ensures scalability, a UE config ID is introduced to further simplify process of the received UE requests by the gNB. In another embodiments, associated IDs can be used, e.g., if they have a fixed mapping to some underlying physical or logical conditions.

In an example, an OTT can enable scalability by ensuring that only one set of parameters/configuration are requested from one gNB at a time. This upper bound can be changed if the gNB allows a higher number to be requested. However, if the entity responsible for process and scalability of configuration requests is the CN or OAM, the upper bound can be larger since 1) these entities deal with requests from more than one OTT server and 2) they may directly request the gNB to identify an upper bound that it can handle depending on its available computational resources. In another example the gNB may determine an upper bound and indicate it to the CN/OAM without an explicit request from the CN/OAM, or the gNB may indicate to the UE/CN/OAM that it is ready to receive a new configuration/set of parameters. The gNB can indicate its acceptance/rejection related to received UE requests to the CN/OAM/UE(s) along with indications related to, e.g., a reason for rejection of the request, e.g., scalability issues or non-applicability at the time. This assists the OTT server to provide refined requests in subsequent iterations/trials for example.

Note that the present disclosure refers to configurations for data collection. However, proposed enhancements are also applicable to configurations requested by UE during inference, monitoring and retraining. For instance, UE may request specific configuration(s) during inference to employ one of its already trained models while ensuring consistency between inference and training (including training data collection).

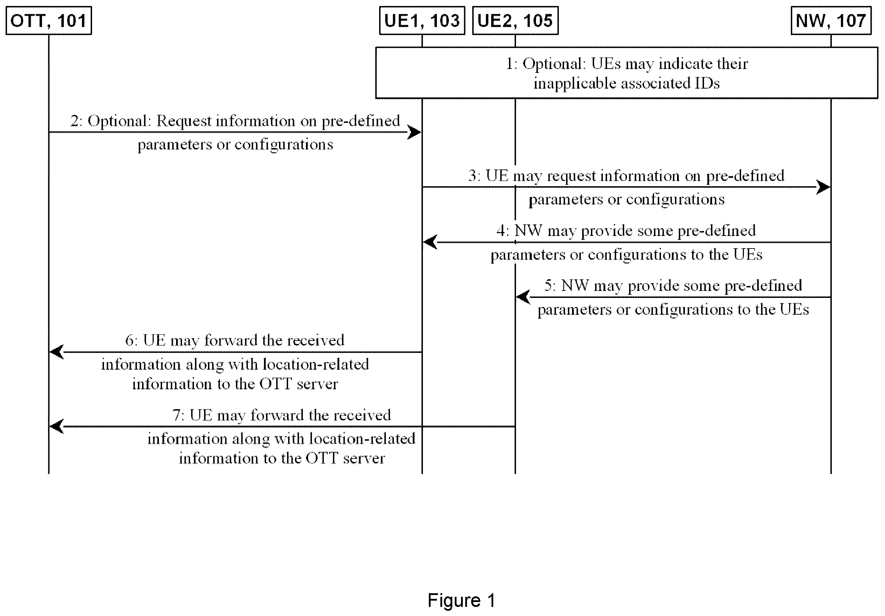

Figure 1 is a signaling chart relating to NW sharing of applicable (or supported or feasible) configuration information with a UE/its corresponding OTT server via UE, according to an example.

In the example of figure 1, UE (103, 105) requests for specific configuration(s) (or parameter(s)) are taken into account by a NW, e.g., gNB, 107. In the example of figure 1, this is facilitated by the NW 107 indicating configuration parameters that it can support.

At 1, the UE(s) 103, 105 may have already indicated to the NW 107 that they do not have sufficient measurements corresponding to, e.g., an associated ID or a specific range of parameters (for instance, from the *CSI measconfig*)*.* This assists the NW to provide more relevant and less redundant information about the feasible configurations to the UE/the OTT server. Along with a UE discovering that it does not have sufficient measurements, it might be possible that the NW may discover (through analysis) which configurations can be supported. For instance, the NW may analyse certain set(s) of measurement configurations for which a UE may never have been able to collect data for or indicate an issue (such as low power state, insufficient resources) associated with those configurations. Through such indications, the NW could identify which configurations are good or bad and the NW may state what relevant configurations can be supported.

At 2, the OTT server 101, via UE 103 or the UE 105, can request information from the NW (gNB) 107 regarding the set of configurations or configuration parameters that the gNB 107 can use to configure the UE for data collection and/or inference. The Request information at 3 may be initiated based on a request from the OTT server 10 or by a UE, 103, 105 itself.

According to an example, at 4, the NW 107 provides a set of pre-defined parameters to the UE 103 based on the request. In an example, the NW 107 may provide such information based on the received requests to specific UE(s). In another example, the NW may broadcast such information to all UEs that it serves. In another example, the NW may ignore / reject the request.

The pre-defined set of parameters can be directly in the form of feasible configurations, or can define an exact value or a range for one or multiple parameters that can be configured by the gNB 107. For example, the gNB 107 may inform the UE 103 that it can receive a configuration to perform CSI reference signal (CSI-RS) measurements for frequency range X and Y. Another example could relate to the number of CSI-RS and their associated beam widths. In this context, the parameters may refer to both logical and physical parameters. In other examples, some IDs with specific mappings to specific characteristics might be communicated to the UE 103. One example of such IDs can be the associated described above. These different forms are applicable also to the OTT 10 and UE 103, 105 request for specific configurations.

In an example, an applicability period for the configuration and pre-defined parameters can be included in message from the NW 107 to the UE 103. This applicability period can determine over which time window the indicated configurations and parameters are applicable and, e.g., most likely supported by the NW 107 in case of a request from a UE/OTT server. An upper bound on the number of configurations or parameters that can be requested at a time can also be stated from the NW in the message. When no upper bound is provided, one can be considered as the default value.

At 6, the received information may be processed by the UE 103. Alternatively, the information may be forwarded to the OTT server 101 for interpretation and processing. In the case that the NW 107 rejects/ignores the request from the UE, UE may inform the OTT server 101. It should be noted that, in relation to figure 1, a network entity (e.g., a gNB) is logically provided between the UE 103, 105 and the OTT server 101 in order to relay message/data between the UE 103, 105 and the OTT server 101, however this entity is omitted for the sake of clarity.

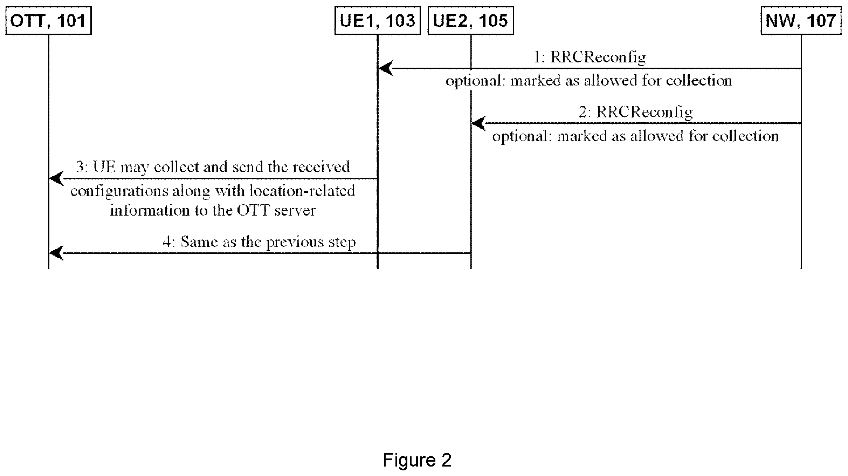

Figure 2 is a signaling chart relating to (NW allowed) collection of historical configuration information by a UE, according to an example. In the example of figure 2, at 1-2, UE 103, 105 can collect configurations from the NW 107. Accordingly, the UE 103, 105 can estimate which parameters are feasible to be configured at which areas and over which time windows or for what kind of channel conditions, etc. The configurations, e.g., RRC Reconfiguration, may be enhanced to have an indication of whether the UE is allowed to collect the configurations. In an example, the indication can be a one-bit flag to permit/not permit. In another example, the indication may include information on whether the collection is allowed only at the UE 103, 105, only at the OTT server 101, or both. These collected configurations can be processed by the UE or the corresponding OTT server to allow them for extraction of configurations and/or configuration parameters for their data collection request that are supported from the NW perspective.

Accordingly, a configuration that is dedicated for UE 103, 105 is provided by the gNB 107, and UE 103, 105 provides this to the OTT server 101 (at 3/4). Note that in the example of figure 1, the NW 107 provides a configuration to UE 103, 105.

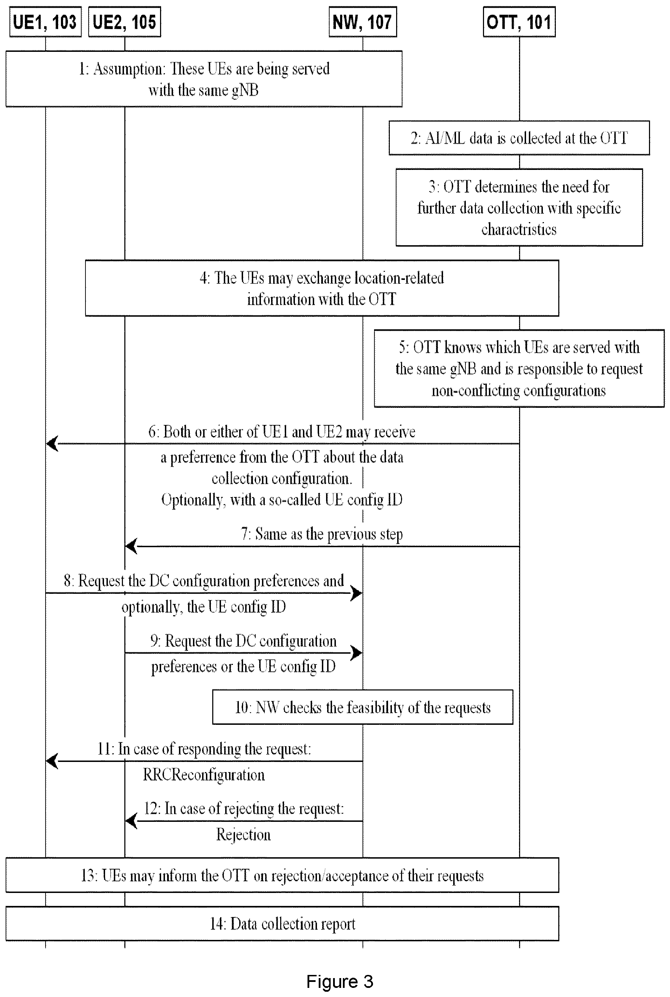

Figure 3 is a signaling chart relating to a procedure in which an OTT is responsible for scalable UE configuration requests while UE configuration requests are indicated to the NW via UE(s), according to an example.

Whether the UE/OTT server have some information about previous NW configurations (e.g., based on signaling described above with reference to Figure 2) or about the feasible/supported NW configurations at a given time-period (e.g., based on the signaling described above with reference Figure 1), the UE (101; 103)/OTT server 101 may request specific configurations or configurations parameters from the NW 107.

Figure 3 depicts a process in which UEs are served by the same gNB (1). The same signaling and procedure applies to other groups of UEs being served by other gNBs. With reference to figure 3, at 2, it is assumed that the OTT server 101 is the termination point for data collected for training UE-side models (such data can also be stored at the UE side depending on data size). At 3, OTT 101 can determine that new data/measurements should be collected from the UE 101; 103 that requires gNB configurations. While making such decisions are implementation specific some examples comprise:
- OTT 101 may recognize that it does not have sufficient samples collected while the UEs were served in a specific cell or geographical area;
- OTT 101 may identify a lack of CSI measurements for interference measurement, also referred to as IM (compared to channel measurements), and hence it would require such information to take the impact of interference into account in training AI/ML models;
- depending on the hardware performance (RF module performance), the OTT 101 may identify the need for collection of data with specific characteristics such as measurements performed considering a specific frequency range;
   - OTT 101 may identify that one or several UEs have inapplicable models or that performance of a model is below a threshold which triggers retraining of the model. In such cases, collection of new data with specific characteristics is required.

At 4, UEs 103; 105 may share information about their location to the OTT server 101 in different forms. For example, the location information may include information on the position of the UE with a specific accuracy, or can be an ID identifying the rough location of the UE in the NW, e.g., to within 500m etc., or can be an ID that uniquely identifies the gNB serving the UE, or the UE can indicate its model ID(s) available or in-use to the OTT server, where the model ID may represent or include model's metadata information.

At 5, based on the information shared at 4, the OTT server 101 can determine which UEs 103; 105 are being served with the same gNB 105. Therefore, the OTT server 101 will generate only one configuration or only one set of configuration parameters for the UEs 103; 105 being served by the same gNB 105 at a given time. Different configurations/parameters can be provided to the UE and then gNB. This allows for a scalable solution and not overloading the gNB with too many different configurations.

At 6-9, the configurations/parameters from 5 can be communicated to the UEs 103 ;105. In one example, the OTT server 101 may communicate the configurations/parameters only to one UE. That one UE can then forward a request containing them to the serving gNB, 105. While this is scalable from the point of view of the NW receiving only one such request, the NW can then apply the configurations to only that UE since the gNB may not have the information on which UEs belong to the owner of the OTT server. As a result, in this example, the request may also include some information on which UEs should receive the requested configuration. One example is to state X UEs from, e.g., a vendor Z should be configured with the requested parameters. To identify the target UEs (UEs from vendor Z) in such cases, the gNB may request some relevant information from the CN.

According to an example, a UE configuration ID is, e.g., assigned by the OTT server 101, and refers to a configuration request from the OTT server 101 that should be applied to a specific group of UEs (in an example, a group of UEs may include at least two UEs connected to the same gNB). So, for example:

UE1 receives a data collection configuration from OTT server 101 and a respective assigned UE configuration ID. UE2 receives the same respective assigned configuration ID from the OTT server 101. UE1 forwards the received information to the gNB. UE2 forwards the received information to the gNB. In another example, UE2 may only transmit the ID (no configuration). gNB recognizes, due to the same configuration ID, that both requests from UE1 and UE2 are related to the same configuration request. Accordingly, gNB may then decide to allow the one request and reject the other based on some criteria, e.g. current load, etc. gNB may alternatively decide to allow both requests to enable the OTT server to collect more relevant data. gNB may alternatively reject both requests based on other criteria such as due to scalability issues, i.e., reception of many different configurations at the same time.

According to an example, the NW can provide information that it supports requests for RS transmission over, e.g., a frequency range x1 to x2 for a certain period of time. However, a UE may still request RS configuration with frequency band allocation between, e.g., x3 and x4 while x1<x3<x2 and x4>x2 or x2<x3<x4.

In another example, the NW can provide information that it supports requests for RS transmission over, e.g., a frequency range x1 to x2 for a certain period of time. The NW may not provide any information about available beam width. The UE request may still request RS transmission using narrow beams.In another example, the OTT server 101 can send the same desired configuration parameters to different UEs and the UEs forward the request to the NW 105. This is still scalable, as at 5, OTT 101 ensures activation/existence of only one set of parameters at a time in the UE configuration request. In other words, the gNB is receiving a copy of the same configuration request multiple times. Even if other OTT servers perform a similar action, the gNB needs to deal with only limited numbers of different parameters at a time.

To further reduce gNB's computational complexity and the resulting latency for determining which UEs have the same configurations, the UEs requesting the same configuration may indicate a so-called UE configuration ID to the gNB. This UE configuration ID can be part of the requests from all UEs. In another example, one UE can transmit its UE configuration ID and the requested parameters while the other UEs transmit their requests only with the UE configuration ID. Such configuration ID can be assigned by the OTT server 10 and should be distinguishable compared to the UE configuration IDs used by other OTT servers. In another example, the configurations may only include associated IDs to enable scalability and fast processing of the requests by the gNB. Moreover, the requests at 8-9 of figure 3 can be transmitted over UE assistance information (UAI).

At 10-12, in case of validity of the configuration request(s), the NW 105 responds by configuring the UE(s) 103; 105 accordingly. On the other hand, in case the NW 105 decides that a UE should not receive the requested configuration, it may explicitly reject the request. In an example, the rejection can indicate that the rejection is due to scalability issues, i.e., reception of many different configurations at the same time. Such an indication is useful in particular if the exchanged location information at 4 does not uniquely clarify which UEs are served by which gNB. In another example, the UE does not receive any configuration as requested which may imply rejection from the NW.

At 13, the UEs 103; 105 may inform OTT server 101 about the acceptance/rejection of the configuration requests. This information can be used by the OTT server 101 in the design of further requests. The measurement and the data collected at the UE side can be transmitted to the OTT server in different ways. For example, in a gNB-centric example, the UE 103; 105 may send the collected data to the gNB 105. In such cases, messages at 6-9 can include the address for the OTT server 101 so that the gNB 105 can forward the information to the OTT server 101. In a CN based or OAM based example, the UE 103; 105 request can comprise some information to map which CN based or OAM based data collection job are corresponding to the requested configuration by the UE. Hence, the gNB 105 can understand where to transmit the data after receiving them from the UE 103; 105. In another example, the UE 103; 105 can transmit the data to the OTT server 10 in a transparent manner to the gNB, e.g., over the user plane.

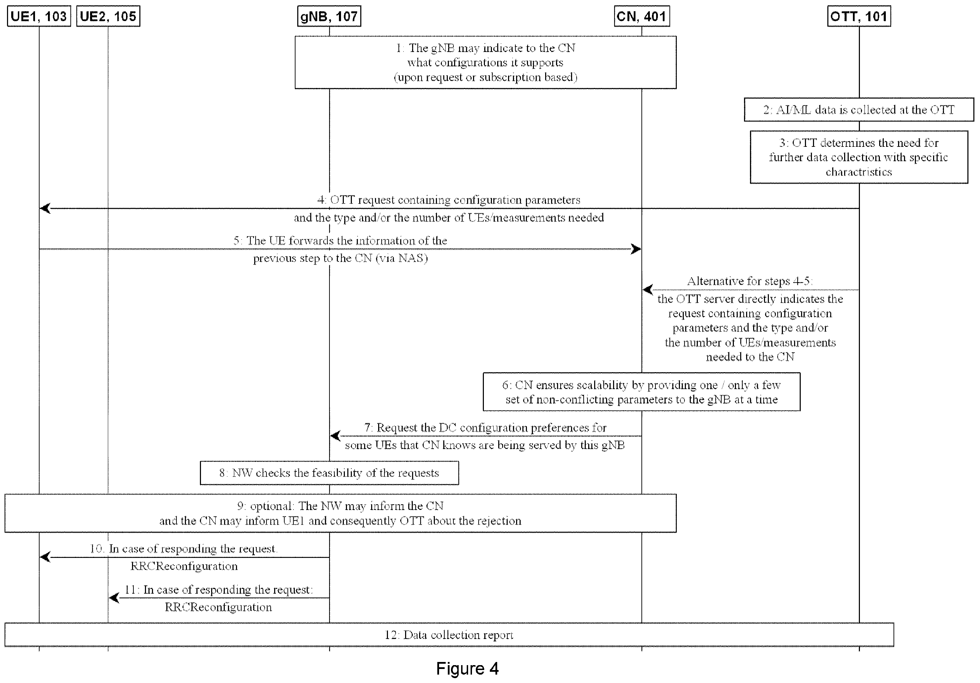

Figure 4 is a signaling chart relating to a procedure in which UE/OTT request parameter configurations from a gNB via the CN, according to an example. In the example of figure 4, OTT server 101 does not need to know the location of the UEs (e.g., no need for messaging 4 of Figure 3) since the selection of UEs can be assisted by the CN 401.

At 1, the gNB 107 may share some information regarding the configuration parameters it supports in general and/or over specific time window. Here, the gNB 107 may indicate an upper bound on the number of configurations and/or on the number of parameters requested to have a certain value or range. This upper bound can be indicated to the CN 401 from the gNB 107. The process at 2-3 is as described above with reference to figure 1 to 3.

At 4, OTT server 101 communicates its preferred configuration parameters to the CN 401. In the example of figure 4, since the CN 401 oversees scalability, the OTT 101 request may include various parameters and different ranges. This request may also include information regarding the geographical area. For instance, configure UEs with IDs X1 and X2 to collect data based on Configuration Y in geographical area Z. In other examples, UEs belonging to a specific vendor might be target. In another example, a specific gNB may be the target. Some examples as to what the request configuration may contain are described above with reference to Figure 3.

In the example of figure 4, the OTT request can be communicated, e.g., to one UE to avoid overcrowding the CN 401 with different requests from different UEs. The OTT request in this scenario may include multiple configuration requests implicitly and explicitly. It may also include the address information of the OTT.

At 5, the selected UE 103; 105 forwards the requested configuration to the CN 401. The communication can be done via, e.g., a NAS message transfer. A benefit of this is that unlike UAI, NAS requests are not ignored by the CN 401. In another example, instead of 4 and 5, the OTT server 101 may directly communicate with the CN 401, e.g., via NEF and indicate OTT requests regarding the configurations.

At 6-7, the CN 401 is responsible for scalability. For instance, the CN 401 may receive a request from UE 103; 105 to configure some UEs with Configuration X and some UEs with configuration Y. In such cases, the CN 401 can communicate Configuration X to the gNB 107, wait for the data collection to be concluded and then over a different time period request the gNB 107 to configure some UEs with configuration Y. It is possible to provide more than one configuration to the gNB at a time. However, an upper bound may be selected for this number. In the case that the request comprises ranges/values for some parameters, e.g., range X1 and range X2 for the frequency range of allocated RSs, the same procedure is applicable, i.e., the CN decides to ask the gNB for configurations of both requested ranges simultaneously or subsequently.

At 8, gNB 107 can evaluate feasibility of applying the configurations for the determined UEs (by the CN 401). In addition to evaluating feasibility of applying the configurations from the UE request, e.g., considering the RRM needs at the time, the gNB may verify the UEs before applying the configurations. Such verification can be initiated by the gNB. In one example, the gNB 107 may communicate via CN 401 to OTT 101 for verification before configuring the UE.

At 9 - 11, in case the gNB 107 rejects the indicated configuration from the CN 401 based on, e.g., gNB's 107 internal logic and RRM requirements at the time, the gNB 107 may inform the CN 401. The CN 401 may request the same configuration again at a different time. Additionally, the CN 401 may inform the UE 103; 105 about the received rejection. This information might be exchanged to the UE after receiving the first rejection or after reception of multiple rejections from the gNB for a given set of configuration parameters (over NAS). The UE 103; 105 then informs the OTT 101 accordingly. In case the gNB 107 accepts the indicated configuration from the CN 401, the process at 10 and 12 is followed. At 12, the signaling procedure of a CN based solution can be applied.

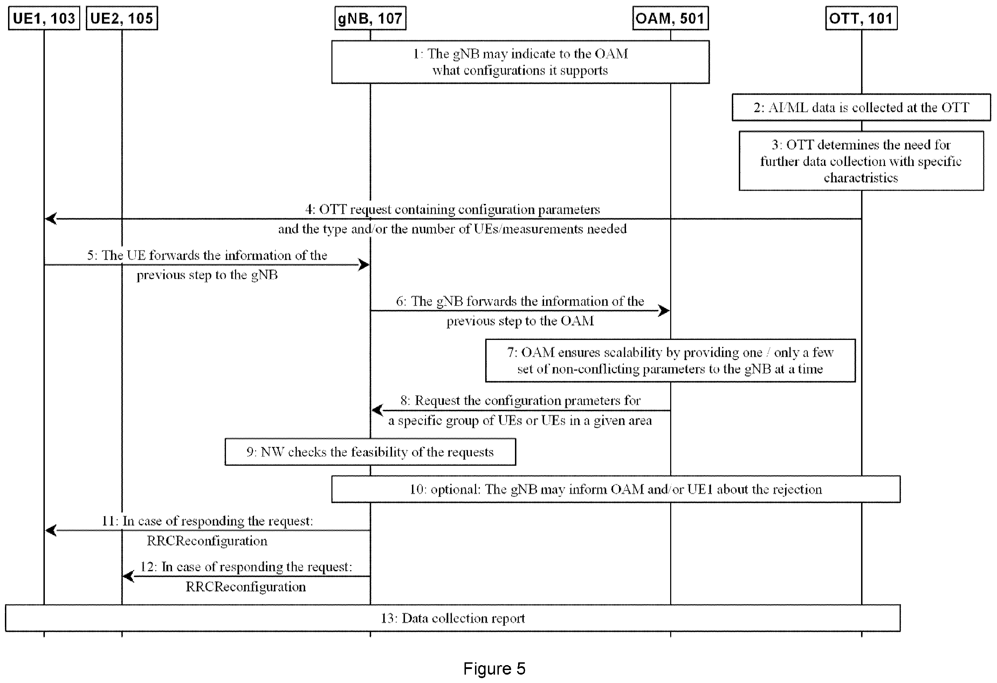

Figure 5 is a signaling chart relating to a procedure in which UE/OTT requests parameter configurations from a gNB via an OAM function, according to an example. The example of figure 5 is similar to that described above with reference to figure 4. However, in the example of figure 5, an OAM function 501 is responsible for scalability of the requested configurations. Moreover, to select a specific set of UEs, an enhanced signaling based Minimization of Drive Tests (MDT) can be used, whilst to target a specific area an enhanced management-based MDT approach can be employed. MDT is a standardized mechanism introduced by 3GPP to optimize the collection of network performance data by leveraging UE instead of relying solely on traditional drive tests. MDT enables network operators to gather real-world data from UEs in the field, reducing the need for costly and labor-intensive drive tests while providing a more comprehensive view of network performance.

At 1-4, information regarding support of gNB for some configuration parameters is exchanged with the OAM 501 (instead of the CN 401 as described above with reference to Figure 4).

At 5-6, for OTT requested configuration(s) to reach OAM 501, the UE 103; 105 communicates them to the gNB 107 and gNB 107 forwards them to OAM 501 for further processing.

At 7-8, OAM 501 is responsible for scalability and hence, considering the requested configurations from different OTT servers and ongoing initiated MDT jobs at the OAM, OAM 501 may provide an enhanced MDT configuration for data collection to the gNB 107. In a management-based MDT, the gNBs in the determined area of the OTT request are the targets receiving the MDT configuration/activation. In signaling based situations, specific UEs can be tracked and the gNB(s) are selected accordingly. The process at 9 is similar to that escribed above with reference to figure 1 to 4 for example.

At 10, since currently no direct interface between the OAM 501 and UE 103; 105 exists, the gNB 107 may inform the OAM 501 about the rejection. A reason for the rejection can be, e.g., insufficient scalability. For only rejection, in one example, a legacy deactivation mechanism may be used. As a result, in such a case, OAM 501 can provide a smaller number of configurations/configuration parameters to the gNB 107 compared to the failed scenario. If, at 8, the OAM 501 indicates to the gNB 107 that the MDT activation refers to the requested configuration of a specific OTT server 101, the gNB 107 can also forward the rejection related information to the OTT server 101 via one or more UEs.

At 11-12, in case of acceptance, the UE(s) 103; 105 are configured according to the requested parameters received from the OAM 501.

At 13, the collected data at the UE 103; 105 is then transmitted to the gNB 107 and from the gNB 107 to the OTT server 101 (note that the MDT activation should already include the address information of the OTT server 101).

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a machine such as a general-purpose computer, a platform comprising user equipment such as a smart device, e.g., a smart phone, a special purpose computer, an embedded processor or processors of other programmable data processing devices to realize the functions described in the description and diagrams. In particular, a processor or processing apparatus may execute the machine-readable instructions. Thus, modules of apparatus may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

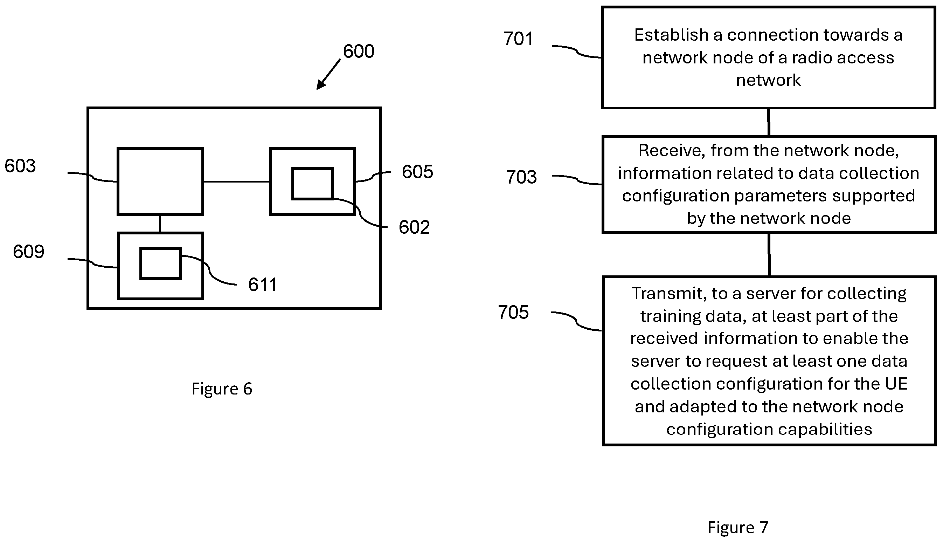

Figure 6 is a schematic representation of a machine according to an example. The machine 600 can be, e.g., a system or apparatus, user equipment, network node or part thereof, or server or other network entity or function. The machine 600 comprises a processor 603, and a memory 605 to store instructions 602, executable by the processor 603. The machine comprises a storage 609 that can be used to store data 601 representing configuration parameters and/or configurations and so on as described above with reference to figures 1 to 5 for example.

The instructions 607, executable by the processor 603, can cause the machine 600 to establish a connection towards a network node of a radio access network, receive, from the network node, information related to data collection configuration parameters supported by the network node, and transmit, to a server for collecting training data, at least part of the received information to enable the server to request at least one data collection configuration for the UE and adapted to the network node configuration capabilities.

Accordingly, the machine 200 can implement a method for a UE or its corresponding OTT server to suggest one or more data collection configuration(s) to a NW for training data collection in a scalable and efficient manner.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams. Further, the teachings herein may be implemented in the form of a computer or software product, such as a non-transitory machine-readable storage medium, the computer software or product being stored in a storage medium and comprising a plurality of instructions, e.g., machine readable instructions, for making a computer device implement the methods recited in the examples of the present disclosure. In some examples, some methods can be performed in a cloud-computing or network-based environment. Cloud-computing environments may provide various services and applications via the Internet. These cloud-based services (e.g., software as a service, platform as a service, infrastructure as a service, etc.) may be accessible through a web browser or other remote interface of the user equipment for example. Various functions described herein may be provided through a remote desktop environment or any other cloud-based computing environment.

Figure 7 is as schematic representation of a method, according to an example. In block 701, an apparatus for UE establishes a connection towards a network node of a radio access network. In block, 703, the apparatus receives, from the network node, information related to data collection configuration parameters supported by the network node. In block 705, the apparatus transmits, to a server for collecting training data, at least part of the received information to enable the server to request at least one data collection configuration for the UE and adapted to the network node configuration capabilities.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

## Claims

1. An apparatus for user equipment, UE, comprising:
at least one processor; and
at least one memory comprising instructions configured for influencing data collection configurations in a wireless communication network which, when executed by the at least one processor, cause the apparatus at least to:
establish a connection towards a network node of a radio access network;
receive, from the network node, information related to data collection configuration parameters supported by the network node; and
transmit, to a server for collecting training data, information based at least in part on the received information to enable the server to request at least one data collection configuration for the UE and adapted to the network node configuration capabilities.

2. The apparatus of claim 1, wherein the apparatus is caused at least to:
transmit, to the network, a request for information indicating supported data collection configurations.

3. The apparatus of claim 2, wherein the apparatus is caused at least to:
include at least one associated ID with the request, wherein the at least one associated ID comprises a mapping of consistency between training and inference assumptions based on selected physical or logical network conditions.

4. The apparatus of claim 2 or 3, wherein the apparatus is caused at least to:
receive, from the server, a configuration identifier, ID; and
include the configuration ID in the request.

5. The apparatus of any preceding claim, wherein the apparatus is caused at least to:
receive, from the server, an indication to request information indicating supported data collection configurations.

6. The apparatus of any preceding claim, wherein the apparatus is caused at least to:
transmit, to the server, information relating to a location of the apparatus with the information indicating supported data collection configurations.

7. The apparatus of any preceding claim, wherein the apparatus is caused at least to:
transmit collected measurement data directly to the server via user plane communication or via a network node.

8. The apparatus of any preceding claim, wherein the apparatus is caused at least to:
receive, from the server, an indication of a single request for information indicating supported data collection configurations, wherein the indication of the single request comprises an aggregation of multiple requests from user equipment served by the same network node as the apparatus.

9. The apparatus of any preceding claim, wherein the apparatus is caused at least to:
receive, from the network node, information related to data collection configuration parameters supported by the network node, wherein the parameters comprise at least one of logical parameters and physical parameters, and wherein the information comprises at least one of:
at least one feasible configuration;
a pre-defined set of parameters defining a value or a range of values for one or more parameters to be configured by the network node;
an indication to perform CSI reference signal (CSI-RS) measurements for a selected frequency range;
a number of CSI-RS and their associated beam width;
an upper bound on the number of configurations or parameters that can be requested at a time;
an applicability period.

10. The apparatus of any preceding claim, wherein the apparatus is caused at least to transmit, to the server, location-related information.

11. The apparatus of any preceding claim, wherein the apparatus is caused at least to transmit, to the network node, a data collection configuration request, wherein the data collection configuration request includes parameter configurations adapted to the network node configuration capabilities.

12. The apparatus of claim 11, wherein the apparatus is caused at least to transmit, in addition to the data collection configuration request, a configuration ID received from the server.

13. The apparatus of claim 11 or 12, wherein the apparatus is caused at least to transmit, in addition to the data collection configuration request, information received from the server and related to a type and/or a number of user equipment and/or measurements needed.

14. The apparatus of any preceding claim, wherein the apparatus is caused at least to receive, from the server, and forward to the network node, a specific data collection configuration request, wherein the request includes parameter configurations adapted to the network node configuration capabilities.

15. The apparatus of any preceding claim, wherein the apparatus is caused at least to receive, in response to the data collection configuration request, a data collection configuration, perform data collection according to the received data collection configuration, and transmit a report related to the collected data to the server.

16. A method, comprising:
establishing, at apparatus for user equipment, UE, a connection towards a network node of a radio access network;
receiving, at the apparatus, from the network node, information related to data collection configuration parameters supported by the network node; and
transmitting, from the apparatus, to a server for collecting training data, information based at least in part on the received information to enable the server to request at least one data collection configuration for the UE and adapted to the network node configuration capabilities.

17. A non-transitory computer-readable medium storing instructions that, when executed by a processor, perform the method of claim 16.
